# EUROPÄISCHE PATENTSCHRIFT

(11) **EP 2 486 309 B1**
(45) Veröffentlichungstag und Bekanntmachung des Hinweises auf die Patenterteilung: **04.03.2015**
(21) Anmeldenummer: 10752793.9
(22) Anmeldetag: 07.09.2010
(51) Int. Cl.: F16H 63/30, F16H 61/24

(54) **SCHALTVORRICHTUNG**
SHIFT DEVICE
MÉCANISME D`ACCOUPLER

(30) Priorität: 09.10.2009 DE 102009048876
(43) Veröffentlichungstag der Anmeldung: 15.08.2012
(73) Patentinhaber: Schaeffler Technologies AG & Co. KG, 91074 Herzogenaurach (DE)
(72) Erfinder: KRÄMER, Klaus, 91438 Lenkersheim (DE); SCHWARZ, Uwe, 91052 Erlangen (DE); FEUERBACH, Matthias, 97070 Würzburg (DE)
(86) Internationale Anmeldenummer: PCT/EP2010/063113
(87) Internationale Veröffentlichungsnummer: WO 2011/042274

(56) Entgegenhaltungen:
- EP-A1- 2 072 868
- DE-A1- 10 155 519
- US-A- 4 660 433
- US-A- 5 704 251

## Beschreibung

### Gebiet der Erfindung

Die Erfindung betrifft eine Schaltvorrichtung mit einem Kopfgehäuse und mit mindestens einer Schaltwelle und wenigstens einem Funktionselement an der Schaltwelle, wobei die Schaltwelle an zwei längs zueinander beabstandeten Lagerstellen der Schaltvorrichtung zum Kopfgehäuse beweglich gelagert ist, und dabei wenigstens das Funktionselement längs zwischen den beiden Lagerstellen angeordnet ist.

### Hintergrund der Erfindung

Derartige Schaltvorrichtungen werden in der Regel bei der Montage des Getriebes mit der Schaltwelle durch eine Durchgangsöffnung eines Getriebegehäuses, eines Deckels oder einer Zwischenwand eines Getriebes gesteckt und mit dem Kopfgehäuse an bzw. auf dem Getriebegehäuse, dem Deckel oder der Zwischenwand befestigt. Eine derartige Schaltvorrichtung ist in EP 0 582 804 B1 beschrieben. Die Vorrichtung weist zwei Lagerstellen für die Schaltwelle auf, die in Gusselementen aufgenommen sind. Derartige Anordnungen sind vorgesehen wenn keine Möglichkeit gegeben ist, die Lagerstelle für das untere Wellenende im Getriebegehäuse zu integrieren. Das ist insbesondere dann ein Problem, wenn ein größerer Stützabstand zwischen oberer und unterer Wellenlagerung zu erreichen werden soll.

Andere Schaltvorrichtung der Gattung werden bei der Montage des Getriebes mit einem oder mehreren Funktionselementen wie Schaltfingern so auf dem Kopfgehäuse an bzw. auf dem Getriebegehäuse, dem Deckel oder der Zwischenwand befestigt, dass die Funktionselemente durch eine Durchgangsöffnung des Getriebegehäuses, des Deckels oder der Zwischenwand des Getriebes in das Innere des Getriebes hineinragen. Die Schaltwelle selbst ist aber außerhalb in dem Kopfgehäuse angeordnet, welches in der Regel auf dem Gehäuse, Deckel oder auf der Zwischenwand aufgesetzt und befestigt ist. Eine derartige Anordnung ist in US 4,660,433 beschrieben.

Der Vorteil dieser Anordnungen ist, dass die Schaltwelle mit einer Vielzahl von weiteren Funktionselementen außerhalb des Getriebes mit dem Kopfgehäuse vormontiert werden kann und dann erst als Baueinheit mit dem Getriebe verbunden wird. Der Aufwand zur Montage der Getriebe ist gering. Getriebe und gattungsgemäße Schaltvorrichtungen sind nach dem Baukastenprinzip kombinierbar. Das Reparieren bzw. Austauschen der Getriebe ist einfacher, da im bei Störungen der Schaltvorrichtung nicht mehr das komplette Getriebe zur Behebung des Schadens geöffnet werden muss.

Gattungsgemäße Schaltvorrichtungen sind in DE 101 55 519 A1 und US 5 704 251 A offenbart.

### Beschreibung der Erfindung

Die Aufgabe der Erfindung ist es, eine Schaltvorrichtung zu schaffen, deren Einzelteile kostengünstig herstellbar sind und die einfach montierbar ist.

Diese Aufgabe ist mit dem Gegenstand des Anspruchs 1 gelöst.

Die Erfindung sieht danach eine Schaltvorrichtung mit einem Kopfgehäuse vor, in oder an das zumindest eine Schaltwelle um die eigene Schwenkachse schwenkbar und entlang der Schwenkachse verschiebbar gelagert ist.

Ein Kopfgehäuse ist jedes beliebig ein- oder mehrteilig gestaltete und zum Beispiel schalen-, platten- oder kastenartiges Gebilde aus Spritz- bzw. Gussmaterial aus Metall bzw. Kunststoff. Alternativ ist das Kopfgehäuse ein derartiges Gebilde aus Blech, welches geeignet ist die Schaltwelle, Funktionselemente und die Traverse ganz oder teilweise innerhalb oder außerhalb aufzunehmen und zu tragen. Mit dem Kopfgehäuse ist die Durchgangsöffnung des Getriebes schließlich nach der Montage verschlossen oder zumindest teilweise bedeckt. Die Durchgangsöffnung ist der Eingang für die Schaltwelle oder für Funktionselemente in das Getriebe, durch die die Schaltwelle bzw. die Funktionselemente hindurch in das innere des Getriebes ragen.

Dabei ist auch denkbar, dass die zur Baugruppe vormontierte Schaltvorrichtung z.B. Lagerböcke/Aufnahmen und die daran gelagerten und mit Seilzügen bzw. Gestängen verbundenen Kipp- oder Schwenkhebel des eines mit dem Schalthebel im Fahrzeug verbundenen Übertragungsmechanismus aufweisen. Alternativ sind Elemente von automatisierten Antriebssysteme oder deren Aktuatoren zur Betätigung der Schaltwelle Bestandteil der Baugruppe. Denkbar ist auch, dass die Baugruppe Entlüftungssysteme, Arretier- und/oder Rastelemente umfasst, die zum Beispiel an dem Kopfgehäuse befestigt bzw. an diesem ausgebildet sind.

Bei der Montage des Getriebes wird das Kopfgehäuse der Schaltvorrichtung an bzw. auf dem Getriebegehäuse, an dem Deckel oder an der Zwischenwand abgestützt verschraubt bzw. andersartig befestigt.

Eine Schaltwelle ist jedes beliebig einteilig oder mehrteilig gestaltete und beispielsweise profilierte Stangenprofil, häufig mit rundem oder rechteckigen Querschnitt und aus beliebigen geeigneten Materialien wie Metall oder Kunststoff. Die Schaltwelle ist als Übertragungselement geeignet, Schalt- oder Wählbewegungen des Schalthebels oder einer Aktuatorik in lineare und/oder schwenkbare Bewegungen umzusetzen und diese über Schaltfinger weiterzugeben.

Die Schaltwelle ist in der Regel endseitig an zwei längs zueinander beabstandeten Lagerstellen entweder schwenkbar oder längs verschiebbar oder vorzugsweise schwenkbar und längs verschiebbar an der Schaltvorrichtung gelagert, so dass diese mit mindestens zwei Lagerstellen ausreichend sicher gestützt und geführt ist. Wenigstens ein von der Schaltwelle abgehendes Funktionselement ist längs zwischen den beiden Lagerstellen angeordnet.

Funktionselemente sind beliebig geeignete ein- oder mehrteilig gestaltete Schaltfinger, Arretierungen, Schalt- bzw. Rastierwalzen, Anordnungen der Getriebesensorik oder andere Elemente, die an der Schaltwelle beweglich oder starr befestigt sind.

Die Lagerstellen weisen geeignete beliebige Gleit- und oder Wälzlager für Schwenkbewegungen und/oder Linearbewegungen auf.

Gemäß der Erfindung ist mindestens eine der Lagerstellen in einer separaten Lagerplatte ausgebildet. Die Lagerplatte ist an von dem Kopfgehäuse abgehenden und neben der Schaltwelle verlaufenden Traversen befestigt. In diesem Fall sind die Traversen einteilig mit dem Kopfgehäuse ausgebildet oder lösbar bzw. unlösbar an dem Kopfgehäuse befestigt. Alternativ ist die Lagerplatte einteilig mit den Traversen verbunden. Die Traversen müssen in diesem zuletzt genannten Fall lösbar oder unlösbar an dem Kopfgehäuse befestigt worden sein. Ausgestaltungen der Erfindungen sehen Schaltvorrichtungen mit mehr als einer Lagerplatte mit jeweils einer oder mehr der Lagerstellen vor, die an Traversen befestigt sind. Wenn zwei oder mehr Lagerplatten in der Schaltvorrichtung angeordnet sind, sind diese alternativ zur vollständigen oder teilweise Lagerung ein und der selben Schaltwelle oder zur Lagerung von verschiedenen Schaltwellen vorgesehen.

Eine Lagerplatte ist ein beliebig gestaltetes ein- oder mehrteiliges Bauteil, das geeignet ist, ein oder mehrere der Gleit- bzw. Wälzlager zumindest zur Lagerung der Schaltwelle aufzunehmen. Außerdem ist die Lagerplatte nach einer Ausgestaltung der Erfindung dafür vorgesehen, weitere Funktionselemente aufzunehmen oder aufzuweisen. Die Lagerplatte ist vorzugsweise plattenförmig ausgebildet und dabei oder alternativ ein Guss- oder Spritzteil aus Metall oder Kunststoff, vorzugsweise ein Stanzteil aus Stahlblech.

Die Traversen können beliebig gekröpft oder abgewinkelt verlaufen und sind jedoch vorzugsweise vorwiegend längs mit der Schaltwelle ausgerichtet. Unter Traverse ist dabei ein mechanischer Träger beliebiger ein- oder mehrteiliger Gestalt zu verstehen, der an seinem einen Ende an dem Kopfgehäuse auf beliebige Art fest ist und vorzugsweise ansonsten berührungslos zu dem Kopfgehäuse verläuft. Alternativ kann die Traverse auch zwischen oder außerhalb der Lagerstellen an dem Kopfgehäuse gestützt oder befestigt sein.

Die Lagerplatte kann das Kopfgehäuse berühren, ist jedoch vorzugsweise frei von diesem an mehreren der Traversen aufgehängt bzw. befestigt. Dabei können die Traversen auch ganz oder teilweise innerhalb bzw. außerhalb des Kopfgehäuses angeordnet sein. Die Traversen sind ein Guss- oder Spritzteil aus Metall oder Kunststoff. Alternative Varianten der Erfindungen sehen vor, dass die Traversen ein Stanzteil aus Blech sind.

Der Vorteil der Erfindung liegt darin, dass sich die einzelnen Bauteile der Vorrichtung einfach fertigen lassen, insbesondere wenn die Einzelteile aus Blech sind. Schaltvorrichtungen des Standes der Technik sind beispielsweise in EP 0 582 804 B1 beschriebenen zweiteiligen bzw. in US4,660,433 beschriebenen einteiligen Kopfgehäusen aus Gussmaterial aufgenommen. Die Kosten für die Gusswerkzeuge sind relativ hoch. Mit Schaltvorrichtungen gemäß Erfindung kann teilweise oder ganz auf Bauteile aus Guss verzichtet werden. Das ist insbesondere dann von Vorteil, wenn aufgrund von Kleinserien auf die hohen Anschaffungskosten von Gusswerkzeugen verzichtet werden muss oder wenn bei kleinen oder großen zu erwartenden Serien Kosteneinsparungen durch Verwendung von Blechmaterial anstelle von Guss zu erwarten sind. Gussteile in der erfindungsgemäßen Schaltvorrichtung sind einfach gestaltet und die Gusswerkzeuge sind dementsprechend nicht so teuer.

Die kapselartige Struktur der Kopfgehäuse der Vorrichtungen des Standes der Technik lässt die Montage von Schaltelementen wie Schaltfingern häufig erst zu, wenn die Schaltvorrichtungen auf das Getriebe aufgesetzt sind. Das kann die Montage der Getriebe unter Umständen unnötig verteuern. Außerdem sind in der Regel Gusswerkzeuge zur Herstellung Elemente des gattungsbildenden Standes der Technik teuer und lohnen sich nur für große Stückzahlen. Die Schaltvorrichtung gemäß Erfindung ist aufgrund der Verwendung von Einzelteilen wie Traversen und Lagerplatte(n) einfach und kostengünstig montierbar. Außerdem können die Schaltvorrichtungen nach dem Baukastenprinzip aus unterschiedlichen Bauteilen an unterschiedliche Einbaubedingungen angepasst werden. So ist es zum Beispiel möglich die Stützabstände für zwei Lagerstellen der Schaltvorrichtung durch eine Auswahl entsprechend langer oder kurzer Traversen beliebig zu verlängern oder zu verkürzen. Die anderen Bauteile wie das Kopfgehäuse bleiben von derartigen Änderungen unbeeinflusst. Die erfindungsgemäße Anordnung kann auch Getriebeanordnungen ersetzen, in denen bisher die untere Lagerstelle im Inneren des Getriebes ausgebildet war.

Ausgestaltungen der Erfindungen sehen vor, dass mindestens eine der Lagerstellen zur Lagerung einer Schaltwelle in dem Kopfgehäuse ausgebildet ist und eine oder mehrere Lagerstellen in einer oder mehreren der Lagerplatten. Die Auswahl derartiger Anordnungen ist z.B. von der Größe der zu übertragenden Schaltkräfte und von der Länge der Schaltwelle abhängig.

Die Lagerplatte ist an zwei Traversen befestigt. Die Traversen verlaufen im wesentlichen längs mit der Schaltwelle ausgerichtet, wobei sich die Traversen in einer 180°-Anordnung gegenüberliegen, so dass die Schaltwelle zwischen den Traversen ausgerichtet ist. Die Lagerplatte ist entweder endseitig der Traversen mit Abstand zum Kopfgehäuse oder an beliebigen anderen Stellen zwischen den Traversen befestigt. Es ist auch denkbar dass mehr als eine Lagerplatte an/zwischen zwei oder mehr Traversen aufgenommen ist.

Eine weitere Ausgestaltung der Erfindung sieht vor, dass die zwei Traversen Gleichteile sind. Der Vorteil liegt darin, dass aufgrund doppelter Anzahl der Teile die Kosten für die Herstellung der Traverse und damit für die Schaltvorrichtung reduziert sind.

Ausgestaltungen der Erfindung sehen vor, dass die Traversen mindestens ein weiteres Funktionselement aufweisen oder aufnehmen. So ist vorgesehen, dass zumindest eine der Traversen eine Kulisse aufweist, wobei ein an der Schaltwelle fester Führungsstift oder ein ähnliches Maschinenelement in die Kulisse eingreift. Unter Kulisse sind in diesem Fall die bekannten beispielsweise, bogenförmig verlaufenden oder fischgrätenartig bzw. H-förmig oder beliebig anders ausgebildeten Führungsbahnen zu verstehen, über die Bewegungen der Schaltwelle oder die anderer mit der Schaltvorrichtung funktionsverbundener Maschinenteile zwangsgeführt und begrenzt sind.

Mit Sicht auf die vorteilhafte Ausgestaltung der Traversen als Gleichteile ist es denkbar, dass beide Traversen Kulissen aufweisen, damit beide Traversen mit dem gleichen Werkzeug herstellbar sind, wobei mindestens eine der Kulissen genutzt ist.

Die Traversen und Lagerplatten sind vorzugsweise lösbar aber alternativ auch unlösbar. Denkbar sind geläufige Verbindungen wie Schraub-, Niet- oder Steckverbindungen, Prägungen und Verstemmungen und/oder Kombinationen von diesen.

### Detaillierte Beschreibung der Zeichnung

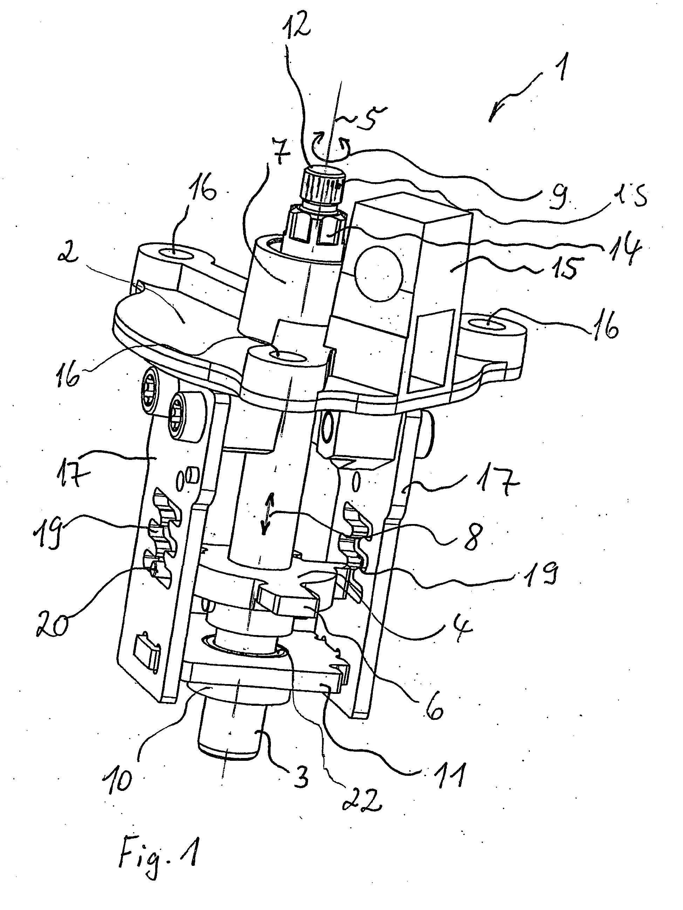

Die Erfindung wird nachfolgend anhand von Zeichnungen näher beschrieben. Figur 1 zeigt ein Ausführungsbeispiel einer erfindungsgemäßen Schaltvorrichtung 1 mit einem Kopfgehäuse 2 zum Auf- oder Einsetzen der Schaltvorrichtung in ein nicht dargestelltes Getriebegehäuse alternativ auf einen Getriebedeckel oder an eine Zwischenwand eines Getriebes mit mindestens einer Schaltwelle 3. An der Schaltwelle 3 ist ein Funktionselement 4 ausgebildet bzw. befestigt. Das Funktionselement 4 weist mindestens einen quer zur Schwenkachse 5 der Schaltwelle 1 ausgerichteten Schaltfinger 6 und mindestens einer Rastkontur auf.

Die Schaltwelle ist an einer ersten Lagerstelle 7 und einer zweiten Lagerstelle 10 jeweils beispielsweise mit einem Lager für Schwenk- und Linearbewegungen in Richtung des Doppelpfeils 8 längs- und in die mit dem Doppelpfeil 9 symbolisierten Umfangsrichtungen um die Schwenkachse 5 schwenkbar gelagert. Die Lagerstellen 7 und 10 sind längs zueinander beabstandet. Das Funktionselement 4 sitzt längs zwischen den Lagerstellen 7 und 10. Die erste Lagerstelle 7 ist in dem Kopfgehäuse 2 ausgebildet. Das Kopfgehäuse 2 ist mit einem Lagerbock 15 versehen, der für die Lagerung eines nicht dargestellten Schwenkhebels vorgesehen ist. Mit dem Schwenkhebel wird die Schaltwelle 3 längs bewegt. Das Kopfgehäuse 2 ist außerdem am Rand flanschartig ausgebildet und mit Durchgangslöchern 16 für nicht dargestellte Schrauben versehen. Mit den Schrauben wird das Kopfgehäuse 2 beispielsweise an ein Gehäuse eines nicht dargestellten Fahrzeuggetriebes geschraubt.

Eine zu dem Kopfgehäuse 2 separate Lagerplatte 11 weist die zweite Lagerstelle 10 auf. Die Schaltwelle 3 durchragt mit ihren Enden jeweils die Lagerstelle 7 bzw. 10, wobei das obere Ende 12 der Schaltwelle Angriffsprofile 13 und 14 aufweist, die als Montagehilfen und/oder als Sitz für nicht dargestellte Betätigungen ausgebildet sind.

Die Lagerplatte 11 ist zwischen zwei von dem Kopfgehäuse 2 abgehenden, neben der Schaltwelle 3 und längs mit der Schaltwelle 3 verlaufenden Traversen 17 aufgenommen. Die Traversen 17 liegen sich in 180°-Anordnung gegenüber, wobei die Schaltwelle 3 zwischen den Traversen 17 verläuft. An den Traversen 17 sind Kulissen 19 ausgebildet. In einer der Kulissen 19 ist ein von dem Funktionselement 4 abgehender Führungsstift 20 zwangsgeführt, so dass die Wege der Schaltwelle 3 längs und die Schwenkwinkel um die Schwenkachse 5 durch die Länge der im Bild links dargestellten fischgrätenartig ausgebildeten Kulisse 19 vorbestimmt sind. Außerdem weisen die Traversen 17 weitere Funktionselemente 25 und 26 wie zum Beispiel ein Steckloch für den Schwenkbolzen einer Sperrklinke und einen Stützstift für die Feder, mit der die Sperrklinke vorgespannt ist auf.

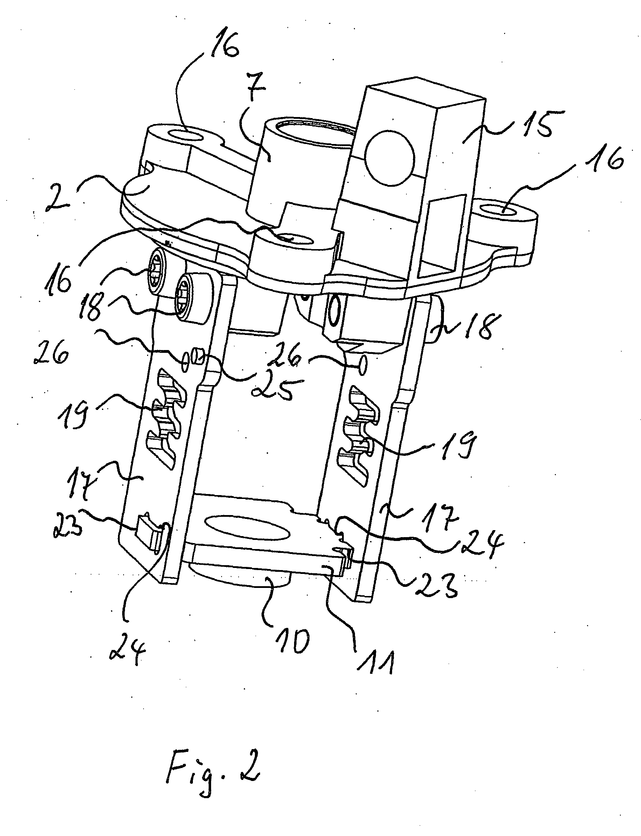

Figur 2 zeigt die eine Vormontagegruppe 21 der Schaltvorrichtung 1, in die die Schaltwelle 3 mit dem Funktionselement 4 montierbar ist. Alternativ dazu kann auch die Schaltwelle 3 erst in das Kopfgehäuse 4 eingesetzt werden und danach werden die Traversen 17 und die Lagerplatte 11 montiert.

Die Traversen 17 sind Gleichteile und vorwiegend durch Stanzen aus Blech hergestellt. Die Lagerplatte 11 ist ebenfalls ein Stanzteil, in das ein Wälzlager 22 eingepresst ist. Wie auch aus Figur 2 hervorgeht, sind die Traversen 17 mittels Schrauben 18 an dem Kopfgehäuse 2 lösbar befestigt. Die Lagerplatte 11 ist zwischen die Traversen 17 geklemmt und durchgreift mit Vorsprüngen 23 zur Bildung einer Steckverbindung mit den Vorsprüngen 23 korrespondierende Löcher 24 in den Traversen 17. Zusätzliche kann die Lagerplatte 11 durch Verstemmen, Vernieten der Vorsprünge 23 an den Traversen 17 gesichert sein. Alternativ ist auch eine Sicherung über Schweißverbindungen möglich.

### Bezugszeichen

- 1: Schaltvorrichtung
- 2: Kopfgehäuse
- 3: Schaltwelle .
- 4: Funktionselement
- 5: Schwenkachse
- 6: Schaltfinger
- 7: Lagerstelle
- 8: Doppelpfeil
- 9: Doppelpfeil
- 10: Lagerstelle
- 11: Lagerplatte
- 12: Ende der Schaltwelle
- 13: Angriffsprofil
- 14: Angriffsprofil
- 15: Lagerbock
- 16: Durchgangsloch
- 17: Traverse
- 18: Schrauben
- 19: Kulisse
- 20: Führungsstift
- 21: Vormontagegruppe
- 22: Wälzlager
- 23: Vorsprung
- 24: Loch
- 25: Funktionselement
- 26: Funktionselement

## Patentansprüche

1. Schaltvorrichtung (1) mit einem Kopfgehäuse (2) und mit mindestens einer Schaltwelle (3) und wenigstens einem Funktionselement (4) an der Schaltwelle (3), wobei die Schaltwelle (3) an zwei längs zueinander beabstandeten Lagerstellen (7, 10) in der Schaltvorrichtung (1) zum Kopfgehäuse (2) beweglich gelagert ist, und dabei wenigstens das Funktionselement (4) längs zwischen den beiden Lagerstellen (7, 10) angeordnet ist, wobei mindestens eine der Lagerstellen (10) in einer separaten Lagerplatte (11) ausgebildet ist, wobei die Lagerplatte (11) von wenigstens einer von dem Kopfgehäuse (2) abgehenden und neben der Schaltwelle (3) verlaufenden ersten Traverse (17) gehalten ist, die Lagerplatte (11) an der ersten Traverse (17) und an einer zweiten Traverse (17) befestigt ist, wobei die zweite Traverse (17) neben der Schaltwelle (3) angeordnet ist, **dadurch gekennzeichnet, dass** die Traversen (17) sich einander gegenüberliegen, wobei die Schaltwelle (3) zwischen den Traversen (17) verläuft.

2. Schaltvorrichtung nach Anspruch 1, **dadurch gekennzeichnet**, mindestens eine der Lagerstellen (7) an dem Kopfgehäuse (2) ausgebildet ist.

3. Schaltvorrichtung nach Anspruch 1, **dadurch gekennzeichnet, dass** die Traversen (17) ein an dem Kopfgehäuse (2) befestigtes separates Bauteil ist.

4. Schaltvorrichtung nach Anspruch 1, **dadurch gekennzeichnet, dass** zumindest eine der Traversen (17) ein separat zu dem Kopfgehäuse ausgebildetes und an dem Kopfgehäuse (2) befestigtes Bauteil ist.

5. Schaltvorrichtung nach Anspruch 1, **dadurch gekennzeichnet, dass** die Traversen (17) gleich ausgebildet sind.

6. Schaltvorrichtung nach Anspruch 1, **dadurch gekennzeichnet, dass** zumindest eine der Traversen (17) eine Kulisse (19) aufweist, wobei ein relativ zu der Schaltwelle (3) fester Führungsstift (20) in die Kulisse (19) eingreift.

7. Schaltvorrichtung nach Anspruch 5, **dadurch gekennzeichnet, dass** die Traversen (17) Kulissen (19) aufweisen, wobei wenigstens ein relativ zu der der Schaltwelle (3) fester Führungsstift (20) in wenigstens eine der Kulissen (19) eingreift und in dieser beweglich geführt ist.

8. Schaltvorrichtung nach Anspruch 1, **dadurch gekennzeichnet, dass** die Lagerplatte (11) und die Traversen (17) mittels Steckverbindungen formschlüssig miteinander verbunden sind.

9. Schaltvorrichtung nach Anspruch 1, **dadurch gekennzeichnet, dass** die Lagerplatte (11) und die Traversen (17) stoffschlüssig miteinander verbunden sind.

## Claims

1. Shift device (1) with a head housing (2) and with at least one shift shaft (3) and at least one functional element (4) on the shift shaft (3), the shift shaft (3) being mounted in the shift device (1) moveably with respect to the head housing (2) at two bearing points (7, 10) spaced longitudinally apart from one another, and in this case at least the functional element (4) being arranged longitudinally between the two bearing points (7, 10), at least one of the bearing points (10) being formed in a separate bearing plate (11), the bearing plate (11) being held by at least one first crossmember (17) emanating from the head housing (2) and running next to the shift shaft (3), the bearing plate (11) being fastened to the first crossmember (17) and to a second crossmember (17), the second crossmember (17) being arranged next to the shift shaft (3), **characterized in that** the crossmembers (17) lie opposite one another, the shift shaft (3) running between the crossmembers (17).

2. Shift device according to Claim 1, **characterized in that** at least one of the bearing points (7) is formed on the head housing (2).

3. Shift device according to Claim 1, **characterized in that** the crossmembers (17) are separate components fastened to the head housing (2).

4. Shift device according to Claim 1, **characterized in that** at least one of the crossmembers (17) is a component formed separately to the head housing and fastened to the head housing (2).

5. Shift device according to Claim 1, **characterized in that** the crossmembers (17) are of identical form.

6. Shift device according to Claim 1, **characterized in that** at least one of the crossmembers (17) has a slot (19), a guide pin (20) fixed in relation to the shift shaft (3) engaging into the slot (19).

7. Shift device according to Claim 5, **characterized in that** the crossmembers (17) have slots (19), at least one guide pin (20) fixed in relation to the shift shaft (3) engaging into at least one of the slots (19) and being guided moveably in this.

8. Shift device according to Claim 1, **characterized in that** the bearing plate (11) and the crossmembers (17) are connected positively to one another by means of plug connections.

9. Shift device according to Claim 1, **characterized in that** the bearing plate (11) and the crossmembers (17) are connected to one another in a materially integral manner.

## Revendications

1. Dispositif de changement de vitesses (1) comprenant un boîtier de tête (2) et comprenant au moins un arbre de changement de vitesses (3) et au moins un élément fonctionnel (4) sur l'arbre de changement de vitesses (3), l'arbre de changement de vitesses (3) étant monté de manière mobile par rapport au boîtier de tête (2) en deux points de palier (7, 10) espacés longitudinalement l'un par rapport à l'autre dans le dispositif de changement de vitesses (1), et en l'occurrence au moins l'élément fonctionnel (4) étant disposé longitudinalement entre les deux points de palier (7, 10), au moins l'un des points de palier (10) étant réalisé dans une plaque de palier séparée (11), la plaque de palier (11) étant supportée par au moins une première traverse (17) partant du boîtier de tête (2) et s'étendant à côté de l'arbre de changement de vitesses (3), la plaque de palier (11) étant fixée à la première traverse (17) et à une deuxième traverse (17), la deuxième traverse (17) étant disposée à côté de l'arbre de changement de vitesses (3), **caractérisé en ce que** les traverses (17) sont en regard l'une de l'autre, l'arbre de changement de vitesses (3) s'étendant entre les traverses (17).

2. Dispositif de changement de vitesses selon la revendication 1, **caractérisé en ce qu'**au moins l'un des points de palier (7) est réalisé sur le boîtier de tête (2).

3. Dispositif de changement de vitesses selon la revendication 1, **caractérisé en ce que** les traverses (17) sont des composants séparés fixés au boîtier de tête (2).

4. Dispositif de changement de vitesses selon la revendication 1, **caractérisé en ce qu'**au moins l'une des traverses (17) est un composant réalisé séparément du boîtier de tête et fixé au boîtier de tête (2).

5. Dispositif de changement de vitesses selon la revendication 1, **caractérisé en ce que** les traverses (17) sont réalisées de manière identique.

6. Dispositif de changement de vitesses selon la revendication 1, **caractérisé en ce qu'**au moins l'une des traverses (17) comprend une coulisse (19), une goupille de guidage (20) fixe par rapport à l'arbre de changement de vitesses (3) venant en prise dans la coulisse (19).

7. Dispositif de changement de vitesses selon la revendication 5, **caractérisé en ce que** les traverses (17) comprennent des coulisses (19), au moins une goupille de guidage (20) fixe par rapport à l'arbre de changement de vitesses (3) venant en prise dans au moins l'une des coulisses (19) et étant guidée de manière mobile dans celle-ci.

8. Dispositif de changement de vitesses selon la revendication 1, **caractérisé en ce que** la plaque de palier (11) et les traverses (17) sont reliées les unes aux autres par engagement par complémentarité de formes au moyen de liaisons par emboîtement.

9. Dispositif de changement de vitesses selon la revendication 1, **caractérisé en ce que** la plaque de palier (11) et les traverses (17) sont reliées les unes aux autres par liaison de matière.
